# EUROPEAN PATENT APPLICATION

(11) **EP 1 637 376 A1**
(43) Date of publication of application: **22.03.2006**
(21) Application number: 04381037.3
(22) Date of filing: 20.09.2004
(51) Int. Cl.: B60J 7/02

(54) **Sliding assembly**

(71) Applicant: GRUPO ANTOLIN-INGENIERIA, S.A., 09007 Burgos (ES)
(72) Inventor: Santaolalla Gil, Joaquin, 09003 Burgos (ES); Gonzales Perez, Jorge M., 09001 Burgos (ES)
(74) Representative: Esteban Perez-Serrano, Maria Isabel

(57) **Abstract**

The object of the present invention is a sliding assembly applicable to devices which are installed inside motor vehicles and which comprise moveable elements, displaceable between two rails, such as slats for concealing roofs with a transparent element or for end bars of window shades. During the sliding motion, this sliding assembly is the guided element which experiences the friction due to displacement and suppresses the clearance in its connection with the rail in the two coordinate directions perpendicular to the forward direction. The friction is produced in a sliding shoe and the clearance in one direction and the other is absorbed in independent resilient means incorporated in a supporting runner.

## Description

### OBJECT OF THE INVENTION

The object of the present invention is a sliding assembly applicable to devices that are fitted inside motor vehicles and which comprise moveable elements, displaceable between two rails, such as slats for concealing roofs with a transparent element or of end rods of window shades.

The sliding assembly is integral with the device or element of the moveable device and is in contact with the guide or rail.

When sliding, this sliding assembly is the guided element which experiences the friction due to displacement and has to be free from clearance in its union with the rail in the two coordinate directions perpendicular to the forward direction.

This invention is characterised in the presence of different resilient solutions configured and integrated by way of laminated springs or arched bands on the actual main body of the sliding assembly, without such means entering directly into contact with the rail, which assure the absence of such clearance.

### BACKGROUND OF THE INVENTION

There are presently diverse solutions applied to the design of elements that slide on guides or rails to prevent the presence of clearance in one or in two coordinate directions.

Throughout this specification, and following the agreement commonly employed in this sector of the art, use will be made of three coordinate axes of reference chosen in the following way:
- X-axis according to the forward direction normally of the vehicle but which in this case will be considered the forward direction of the sliding element,
- Y-axis, perpendicular to the x-axis, horizontal and therefore transverse to the forward direction,
- Z-axis, perpendicular to the two previous axes, and vertical.

Having defined the reference system, mention is made of diverse precursors with the solutions they propose.

The patent with publication number US5906412 describes a sliding construction assembly with application in roofs with a transparent element. Of the two directions (Y and Z) perpendicular to the forward direction X, the sliding assembly makes use of resilient elements for the absorption of clearance only in the Y direction.

There are two proposals for the incorporation of resilient elements. The sliding element consists of a main body in the form of an empty box which is adjusted on a prismatic projection of the slat or element that has to be guided.

The clearance in the Y-direction is related with the gap between the main body in hollow box form and the guided element or slat.

The proposals made in this patent document are two, a first one which incorporates two arched resilient bands or tabs, one on each side, which emerge from the main body and rest on the slat on which it is fixed; and a second proposal which envisages the sliding element divided into two bodies each one of them with an independent resilient element by way of laminated spring interposed inside each of the cavities that house the projection of the guided element or slat.

In the Z-direction, the sliding main body presents an oblique instead of horizontal plane in such a manner that a wedge is established which reduces the possible clearance. This wedge can rest on the external edge of the rail, or on all the internal surface if the rail has the same wedge form adapting in this area to the oblique plane of the sliding element.

In the patent with publication number US6557932, the design is disclosed of an assembly between a sliding element and its rail for roofs of vehicles wherein this sliding element includes means for the absorption of clearance in the Y and Z directions.

The element consists of a recessed and folded plate, preferably in metal sheet, which laterally has two arms that are prolonged above the rail. These arms include some additional friction pieces mounted on the ends. The support applies a force in the Z direction which opposes the pressure which is applied by a resilient essentially L-shaped body. This essentially resilient body owes its elasticity both to the main plate on which it is fixed which is prolonged up to the anchorage on its cantilevered end by way of a band and to some flexible lateral loops which connect with the sliding pieces mounted on the ends of the first arms.

With this design the resilient elements are specially conceived to admit substantial tolerances in the Z direction and to a lesser extent in the Y direction.

In this case the rail consists only of a horizontal projection in plate form which is held or gripped on its upper and lower face by the resilient means which admit clearance in the Y direction, and with a support on the edge with the least possibility of absorbing clearance due to the lower flexibility that the support face presents.

This lower flexibility is due to the cantilever equivalent distance being much smaller in the vertical direction Z. This support surface on the edge of the rail is arched to allow a point support on the rail avoiding wedges.

It is also considered of interest to mention the patent with publication number US4829630 in which a sliding element for windows is disclosed.

This sliding element is housed in a rail whereby it should offer the capability of simultaneous retention in both senses for each direction perpendicular to the forward direction. This is a different situation to that of the precursors already mentioned wherein the sliding element offered retention in the Y direction in one sense, against the rail, but not in the sense of separation from the rail since the sliding element used on the opposite side is that responsible for absorbing such displacements.

In this sliding element resilient elements are used in opposition in the direction which corresponds to the main flanges of the rail, plus other resilient elements in the direction perpendicular to the base of the rail and what they do is to press against the outer flanges of the rail preventing the sliding piece from escaping.

The first resilient elements are configured on the piece itself with arched flat sections by way of laminated spring or of arched fluke while the second resilient elements can be different.

The use of central tabs in opposition is also considered in one of the examples of embodiment.

Lastly mention is made of the patent with publication number JP8175186 wherein a sliding element is described for a concealing device for roofs with transparent element or with a top window based on a single spring in the form of an arched tab joined at one end and capable of sliding on the opposing end where it rests. This tab acts to absorb tolerances essentially in the Z direction. In the Y direction the possibility of wedging for tilting through turning about the vertical Z axis is small since the sliding element comprises the whole length of the lateral section of the concealing element of the window.

All the resilient elements employed in all the precursors mentioned, except for the simplest last one and which does not comprise resilient elements for the Y axis, are directly in contact with the rail for which reason the friction of the displacement affects the wear of these resilient elements reducing their cross section and therefore their resistant capacity.

### DESCRIPTION OF THE INVENTION

The present invention consists of a sliding assembly intended for devices which have moveable pieces such as slats or bars for drawing curtains, both devices for protection from the sun on the interior of vehicle roofs with a transparent element.

These elements moveable and displaceable along a rail require a piece or set of pieces which act to establish the connection of the device with the rail.

This connection, in the ideal case, has to allow displacement in the X direction with minimum retention forces for friction and it has to have resilient means which absorb the clearance in the Y and Z directions.

The present invention consists of an assembly which confers independence on the resilient elements responsible for absorbing the clearance in the Y and Z directions, as well as for the support and sliding functions.

The most important consequences of absorbing the clearance in the Y and Z direction are sliding without impediments and which in turn avoids the appearance of noise.

The assembly object of the invention consists mainly of two pieces: the runner and the shoe.

The runner is the piece which mainly carries out the support functions incorporating the resilient means; and the shoe is the piece which comes into contact with the rail. The shoe is the piece that suffers the effects of the friction with the rail.

The runner mainly comprises a prismatic body with its longest dimension parallel to displacement direction X. This body has means of securing to one side and the other. On one side for the fastening thereof to the moveable element it transports, for example a slat, and on the opposing side for the fastening of the shoe which slides on the interior of the rail.

The means of securing the moveable element it transports can have two possible configurations. A first one consists of a frame with an interior perforation which admits the entry of a projection integral with the transported moveable element. This projection is essentially wedge-shaped to facilitate entry and assembly by clipping. In the second configuration the runner can come with either a frame or a not perforated plate which includes the wedge-shaped projection and is the transported moveable element which the frame or the plate receives which has the cavity or perforation wherein the projection is housed.

On both sides of the frame or plate, according to the case, there are two resilient means which tend to separate the main body of the runner from the transported moveable element. This force which tends to separate the runner absorbs the clearance in the Y direction by compression of the aforesaid resilient means. By having one on each end of the main prismatic body certain degree of tilting or rotation with respect to the Z axis is possible, absorbing the possible deficiencies that occur when pulling or pushing forcefully on the transported moveable element.

When the sun screen device and the sliding assembly are not mounted in the rail, the displacements relative to the Y direction of the runner with respect to the transported moveable element are limited in the direction which corresponds to escaping from its housing by the projection which rests internally on the frame. If the sun screen device and the sliding assembly are mounted in the rail to carry out the sun protection in the roof with transparent element, in one direction of the Y coordinates the displacement is limited by the rail, and in the other direction it is limited by the compression of the laminated springs. The cavity for the projection must never limit the displacement according to the direction of the Y coordinate during the operation.

The absorption of clearance on the Y axis in both directions takes place by the combination of the effects of the resilient means of the assemblies according to the invention present in both rails since a separating displacement with respect to one rail corresponds to an approximation toward the other rail.

Thus, the resilient means responsible for the absorption of clearance in the Y direction tend to separate the main body from the pulled moveable element and accept compression forces. The forces that would correspond to a traction force are also absorbed by compression by the runner mounted on the opposite side of the transported moveable element and which connects with the other rail.

The resilient means responsible for the clearance in the Y direction consist of projections of the main body, and therefore obtained in the forming of the piece, preferably by means of injection-moulding, in laminated spring form or of pairs of bow-shaped tabs mounted in opposition and interlacing one over the other and with relative sliding for the degree of flexion thereof .

This is not the only way of embodying the laminated springs, the same invention also envisages other configurations which allow for example modifying, mainly increasing, the resilient constant. The variations, such as they will be described in some examples of embodiment, make use of laminated springs supported at both ends or they will incorporate additional resilient elements such as elastomer blocks or reinforcing metallic laminated springs.

On the side opposite to the main body of the runner the support of the shoe is to be found with the resilient means responsible for clearance in the Z direction.

The shoe consists of an open and hollow prismatic body into the opening of which the support enters. This support is a prismatic body which includes the resilient elements which apply its pressure in the Z direction on the internal faces of the shoe.

In this case the resilient elements are mounted in opposition applying upward and downward force, this being understood to be opposite senses of the Z direction. The resilient elements consist of bowed flexible laminar forms fastened by one of their ends leaving the opposite one free. This configuration permits flexible elements to be defined in a more reduced space. The direction in which these resilient means are prolonged can be according to the X direction or in the Y direction.

Thus, the shoe which is held in this body with the resilient means is floating with respect to the runner.

The external surface of the shoe has either transverse or longitudinal ribs which reduce the surface rubbing on the rail.

The sliding assembly like that of the invention is present on one and the other side of the transported moveable element on which it is installed where in each rail there can be more than one assembly.

### DESCRIPTION OF THE DRAWINGS

The present descriptive specification is completed with a set of drawings, which illustrate the preferred embodiment but in no way restrict it.

Figure 1 shows a perspective of a first embodiment of the invention wherein the runner and the shoe are shown as well as a length of the rail and a portion of the transported element as could be a slat.

Figure 2 shows a runner according to a second embodiment in which the configuration of the resilient elements has been modified.

Figure 3 shows a runner according to a third embodiment with the resilient means intended to absorb the clearance in the Y direction configured in closed laminated spring form.

Figure 4 shows a runner according to the previous embodiment wherein an elastomer reinforcement has been incorporated.

Figure 5 shows a runner according to the same embodiment wherein a reinforcement has been incorporated consisting of an internal additional metallic laminated spring.

Figure 6 again shows the runner of figure 1 with the amended shoe making use of ribs for reduction of the contact surface of the shoe mounted longitudinally instead of transversely.

### DETAILED EXPLANATION OF VARIOUS MODES OF EMBODIMENT

The object of this invention is a sliding assembly which allows the displacement of a moveable element with reduced friction and with absorption of the clearance in the Y and Z direction.

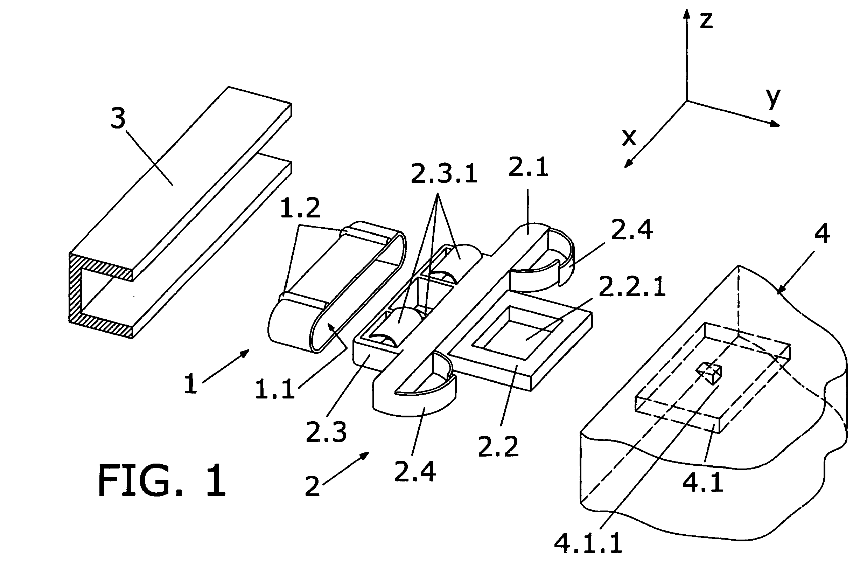

In figure 1 a first example of embodiment is shown of the invention consisting of two pieces: the runner (2) and the shoe (1).

In this same figure the trihedron is represented formed by the three coordinate axes: the X-axis in the forward direction of the assembly with the transported element (4), represented only in its end length with its housing (4.1), the Y-axis perpendicular to the forward direction and contained in the horizontal plane, and the Z-axis according to the vertical direction.

The transported element (4), which is only represented partially in figure 1, can be for example the slat which covers a glazed area of the vehicle roof or it could be the transverse traction bar mounted on the end of a window shade.

By way of example a U-shaped profile is shown which corresponds to the length of the rail (3) wherein the sliding shoe (1) enters. This profile of rail (3) can have a much more complex section to allow in turn its fastening to the structure wherein it will be lodged; however, by way of example, only a U-section has been drawn in this figure.

The shoe (1) consists of a prismatic body (1.1) open on one side to introduce the support (2.3) which links it to the runner (2). On the upper and lower surface of the shoe (1) there are some ribs (1.2) which reduce the contact surface with the rail (3) and therefore the frictional force.

Once the shoe (1) is inserted in its support (2.3), the latter can have internal means of clipping which prevent its escape; however, if the clearance which it has in the Y direction with the rail (3) is reduced, this clipping is unnecessary since the rail (3) itself will impede its escape.

The bond of the shoe (1) with the support (2.3) of the runner (2) is through some first resilient means (2.3.1) which press on the upper and internal lower face of the shoe (1) to absorb the clearance in the Z direction.

These first resilient means (2.3.1) consist of some flexible laminar configurations of curved generatrix fastened at one end and free at the other.

In this preferred embodiment use has been made of three flexible laminar forms, two ends directed upwards and one central in opposition directed downwards.

The opposing orientation defines an intermediate position of balance of the shoe (1) with respect to the runner (2) in such a way that the fluctuations are absorbed by these first internal resilient means (2.3.1) which tend to recover their balanced position.

The first resilient means (2.3.1) are independent of the second resilient means (2.4) responsible for absorbing the clearance and fluctuations of the displacement in the Y direction.

These second resilient means (2.4) are mounted on the opposite side of the main body (2.1) of the runner and they consist in turn of resilient elements arranged at both ends, leaving between a securing frame (2.2), and which rest on the end of the element (4) transported.

The securing frame (2.2) in this example of embodiment consists of a perforated rectangular continuation (2.2.1) which is housed in a cavity (4.1) of the transported element (4), as indicated consisting for example in a slat.

The perforation (2.2.1) allows a wedge-shaped projection (4.1.1) to be housed, which allows the runner (2) to enter but not to leave. As for the internal projection (4.1.1) of the housing (4.1) of the frame (2.2), this (4.1.1) is supported on the interior face of the perforation (2.2.1).

This wedge-shaped projection (4.1.1), as already stated in the description of the invention, is that which could be located on the frame (2.2) or on a not-perforated plate which would replace the frame so that the housing (4.1) of the frame (2.2) or plate would in turn have a cavity or hollow for the wedge-shaped projection (4.1.1).

The second resilient means (2.4) always rests on the end surface of the transported element (4) whereby such resilient means (2.4) are in tension for any relative position between the runner (2) and the transported element (4) allowed by the over-dimensioning of the perforation (2.2.1) of the frame (2.2). This force, always present, is that which prevents the presence of clearance in the Y direction.

The second resilient means (2.4) consist of two bow-shaped flexible laminar conformations, mounted in opposition to each other, so that the compression force makes one bow slide beside the other one.

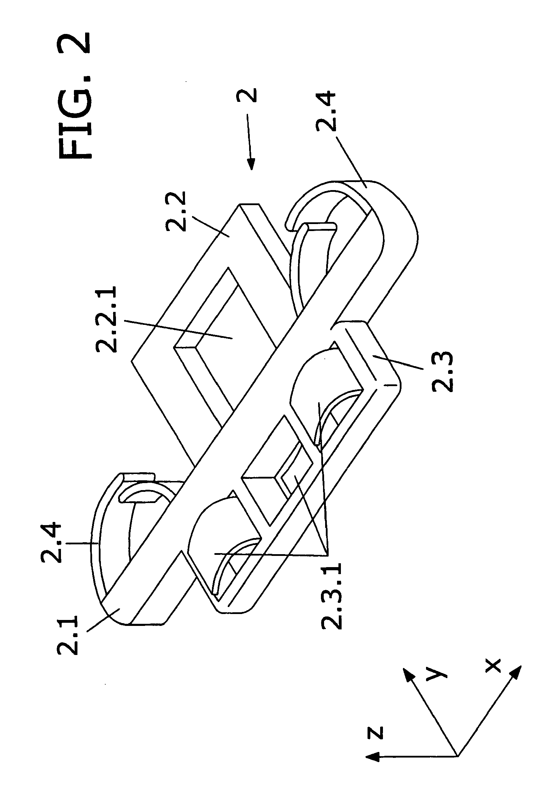

In figure 2 a second example of embodiment is shown in which the first resilient means (2.3.1) consist, the same as is shown in figure 1, in some simple flexible laminar conformations but the direction along which they are prolonged is the X direction instead of the Y direction as occurred in the first embodiment.

As in these two examples of embodiment use has been made of configurations of the rectangular flexible laminar elements (2.3.1) of longest dimension in the X direction, in this second example the flexible elements (2.3.1) are of greater length slightly modifying their elasticity constant with respect to the first example for a same material and thickness.

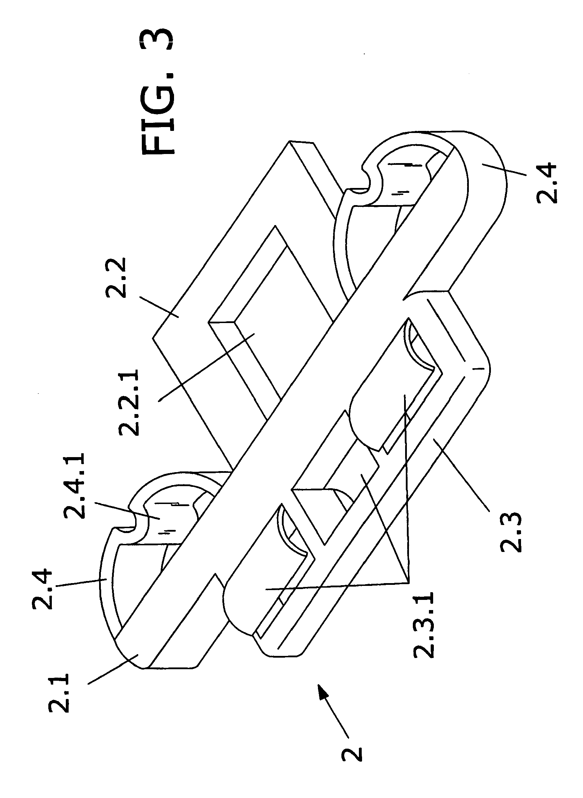

Figure 3 presents a third example of embodiment which modifies, with respect to the first, the configuration of the second resilient means (2.4). In this example the second resilient means (2.4) consist of a single flexible element in laminated spring form interrupted at its middle point by a small bow-shaped length (2.4.1) which results in a projection toward the interior of the arc of the laminated spring.

A closed configuration like that of figure 3 has greater stiffness than the configuration used in the first example of embodiment since the relative displacement between one bow-shaped section and the other is impeded. The ends are joined.

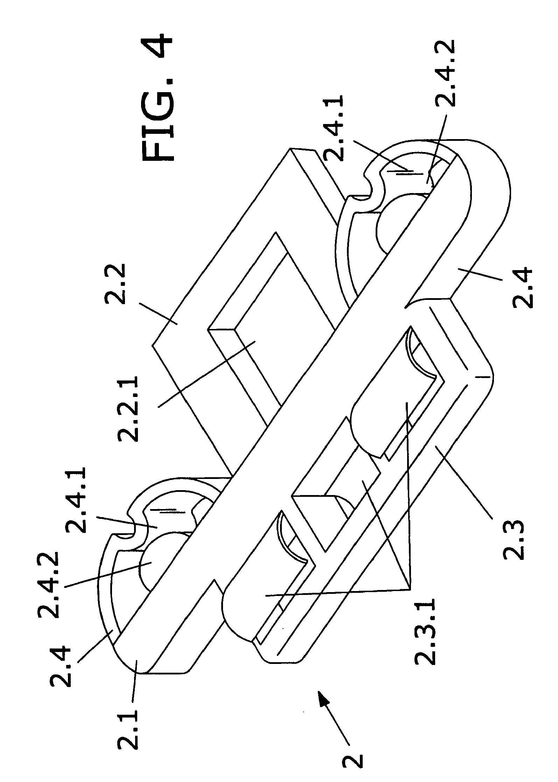

A small variant of this example of embodiment is shown in figure 4 wherein on the inside of this closed laminated spring of the second resilient means (2.4), a small block (2.4.2) of elastomer has been included. The deformation by compression of the laminated spring (2.4), since the latter rests on the block (2.4.2) of elastomer by means of its internal projection (2.4.1), implies in turn the compression of the block (2.4.2) increasing the overall stiffness.

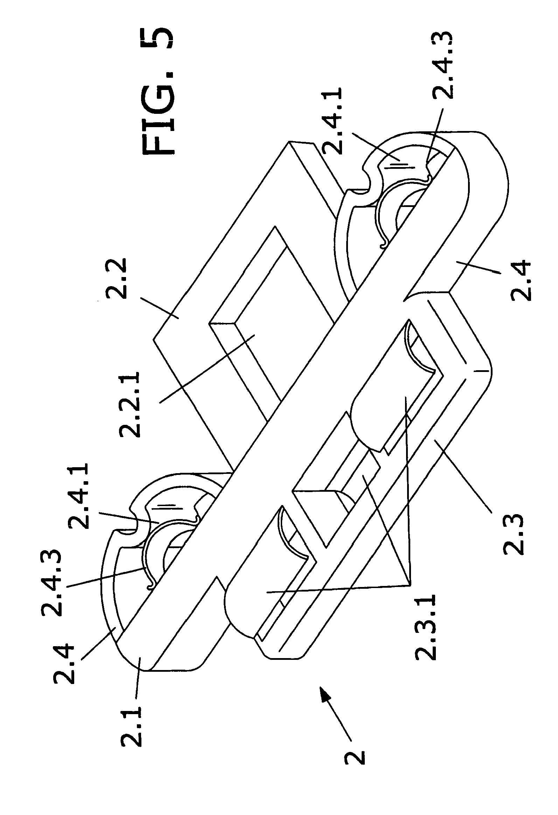

Figure 5 shows another metallic laminated spring (2.4.3) inserted inside the laminated spring of the second resilient means (2.4).

This metallic laminated spring (2.4.3), the same as the elastomer block (2.4.2) of the previous example, increases the overall stiffness since the flexion of the laminated spring integrated in the main body (2.1) of the runner (2) also implies the flexion of the metallic laminated spring (2.4.3).

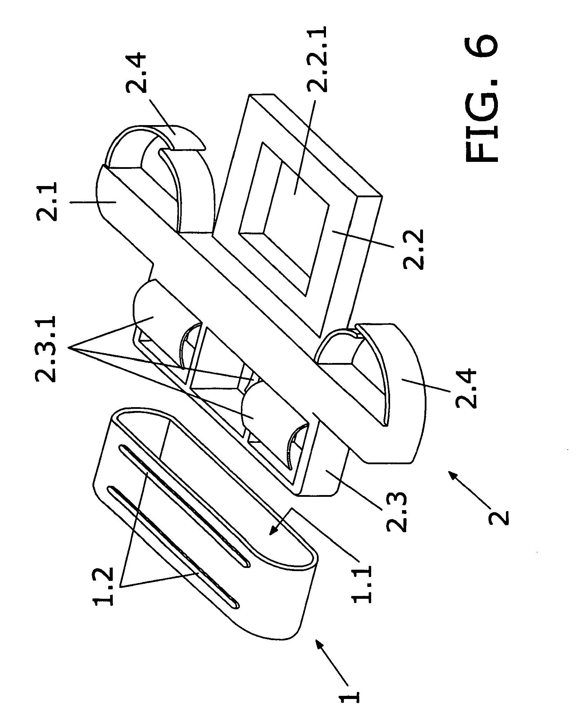

Figure 6 is a detail of the sliding shoe (1) on which the friction ribs (1.2) have been arranged longitudinally with respect to the forward direction X, instead of transversely.

It is emphasised that the first resilient means (2.3.1) rest on the internal face of the shoe (1). The second resilient means (2.4) rest on the surface of the end of the transported element (4). Since the friction is produced between the external ribs (1.2) of the shoe (1) and the rail (3), none of the flexible elements intended to absorb the different clearance in the Y and Z directions experience friction through displacement of the transported element (4).

Except for the reinforcements of the second resilient means (2.4) constituted by elastomer blocks (2.4.2) or metallic laminated springs (2.4.3), the runner (2) is preferably formed by a single injection-moulded piece reducing production costs by eliminating the assembly of various pieces allocated to securing and resilient means.

The essential nature of this invention is not altered by variations in materials, form, size and arrangement of the component elements, described in a non-restrictive manner, sufficient for an expert to proceed to the reproduction thereof.

## Claims

1. Sliding assembly intended to be fastened on the ends of an element (4) transported between two rails (3) advancing by sliding in the X direction constituted at least by two pieces: a sliding shoe (1) and a runner (2), **characterised in that**:
• the runner (2) consists of a body (2.1) which is prolonged mainly in the X direction and which is equipped, on one side, either with a plate or with a frame (2.2) perforated (2.2.1) for anchoring in a housing (4.1) of the element (4) to be transported, with relative displacement in the Y direction, plus some resilient means (2.4), one on each side of the frame (2.2), which press against the end of the element (4) to be transported in any relative position between the two (2, 4) with a tendency to separate the runner (2) from the element (4) to be transported; and, on the opposite side the main body (2.1) is fitted in turn with a support (2.3) of the sliding shoe (1) with some resilient means (2.3.1) in opposition which rest on the upper and lower internal surfaces of the sliding shoe (1),
• the sliding shoe (1) consists essentially of a prism with an opening (1.1) or hollow which houses the support (2.3) with the resilient means (2.3.1), the external faces of the shoe (1) being those which rub against the rail (3),
it also being established that the entirety of the resilient means (2.3.1, 2.4) are integrated in the runner (2), where, the resilient means (2.4) adjacent to the frame (2.2) absorb the clearance in the Y direction and the opposing means (2.3.1) internal to the sliding shoe (1) absorb the clearance in the Z direction.

2. Sliding assembly according to claim 1 **characterised in that** the shoe (1) establishes its contact with the rail (3) through some ribs (1.2) for reduction of the contact surface.

3. Sliding assembly according to claim 2 **characterised in that** the ribs (1.2) for reduction of the contact surface of the shoe (1) are transverse to slide direction X.

4. Sliding assembly according to claim 2 **characterised in that** the ribs (1.2) for reduction of the contact surface of the shoe (1) are parallel to slide direction X.

5. Sliding assembly according to claim 1 **characterised in that** the shoe (1) has internal means of clipping which prevents its escaping from the runner (2).

6. Sliding assembly according to claim 1 **characterised in that** the resilient means (2.3.1) which absorb the clearance in the vertical direction Z are formed by a bow-shaped flexible laminar conformation with one end integral with the runner (2) and the opposite end free.

7. Sliding assembly according to claim 6 **characterised in that** the bow-shaped flexible laminar conformations which constitute the resilient means (2.3.1) which absorb the clearance in the Z direction are prolonged in the Y direction.

8. Sliding assembly according to claim 6 **characterised in that** the bow-shaped flexible laminar conformations which constitute the resilient means (2.3.1) which absorb the clearance in the Z direction are prolonged in the X direction.

9. Sliding assembly according to claim 6 **characterised in that** the bow-shaped flexible laminar conformations which constitute the resilient means (2.3.1) are a total of three, two end ones on one face and another central on the other face.

10. Sliding assembly according to claim 1 **characterised in that** the resilient means (2.4) which absorb the clearance in the Y direction are formed by two bow-shaped flexible laminar conformations and mounted in opposition with mutual displacement during compression.

11. Sliding assembly according to claim 1 **characterised in that** the resilient means (2.4) which absorb the clearance in the Y direction are formed by closed flexible laminar conformations in laminated spring form.

12. Sliding assembly according to claim 11 **characterised in that** the laminated spring which constitutes the resilient means (2.4) intended to absorb the clearance in the Y direction has an internal central projection (2.4.1).

13. Sliding assembly according to claim 12 **characterised in that** the resilient means (2.4) formed according to a laminated spring has a block (2.4.2) of elastomer which increases the stiffness, the support between laminated spring and block (2.4.2) being established by means of the internal central projection (2.4.1).

14. Sliding assembly according to claim 12 **characterised in that** the resilient means (2.4) formed according to a laminated spring has a second laminated spring (2.4.3) inserted which increases the stiffness, the support between laminated spring and block (2.4.2) being established by means of the internal central projection (2.4.1).

15. Sliding assembly according to claim 1 **characterised in that** the anchorage between the frame (2.2) of the runner (2) and in the housing (4.1) of the moveable element (4) in which this frame (2.2) is received is established by means of a wedge-shaped projection (4.1.1) present in the housing (4.1) which receives the frame (2.2) of the runner (2) in such a way that this wedge-shaped projection (4.1.1) enters into the perforation (2.2.1) of the frame (2.2).

16. Sliding assembly according to claim 1 **characterised in that** the anchorage between the plate of the runner (2) and the housing (4.1) of the moveable element (4) which receives this plate is established by means of a wedge-shaped projection (4.1.1) present on the plate of the runner (2) where this wedge-shaped projection (4.1.1) enters into a cavity or hollow of the housing (4.1) of the element (4) to be transported.
